# EUROPEAN PATENT APPLICATION

(11) **EP 3 018 528 A1**
(43) Date of publication of application: **11.05.2016**
(21) Application number: 14191687.4
(22) Date of filing: 04.11.2014
(51) Int. Cl.: G03B 17/02, G03B 19/00, H04M 1/02, H04N 5/225

(54) **Pivotable camera module and electronic device having the camera module**

(71) Applicant: Jia-Tin-Chang Co., Ltd., New Taipei City (TW)
(72) Inventor: Lee, Yen-Ting, New Taipei City (TW)
(74) Representative: Viering, Jentschura & Partner mbB Patent- und Rechtsanwälte

(57) **Abstract**

A camera module comprises a pivot (10) and a lens barrel. The pivot (10) comprises a first end portion (11) and a second end portion (12) opposite to the first end portion (11). The lens barrel (20) is connected to the pivot (10), and comprises a camera lens (21), a focusing structure (22) located on the lens barrel (20), and a pivoting portion (23) opposite to the camera lens (21). The pivoting portion (23) rotatably pivots on the first end portion (11) of the pivot (10). In another aspect, an electronic device comprises the camera module and a body (30), the body (30) comprising an engaging end (31) and an abutment surface (32) adjacent to the engaging end (31); the engaging end (31) is connected to the second end portion (12) of the pivot (10) of the camera module.

## Description

### 1. Field of the Invention

The present invention relates to a camera module, particularly to a camera module comprising a pivot and a lens barrel, so that the pivot serves as an axis for the lens barrel to rotate. The present invention also provides an electronic device having said camera module, and using said camera module to shoot images rotatably.

### 2. Description of the Prior Arts

Most mobile phones or tablets have built-in cameras. In earlier times, the image sensor is equipped with one hundred thousand pixels, leading to vague images. Nowadays, the image sensor has twenty million pixels, and the image quality can compare to the general level of a digital camera. The mobile phone or the tablet having the camera module is one of the most important developments in the electronic device recently.

The zoom ways can be generally divided into two ways, one is digital zoom, and the other is optical zoom. In the past, many mobile phone manufacturers have invented optical zoom mobile phones. However, the optical zoom needs many sets of lens to achieve the zoom, so the mobile phone is thick. Now, the mobile phone and the tablet are expected to be thin and light, so that most of the mobile phone manufacturers disregard the optical zoom and adopt digital zoom for setting a front camera lens and a rear camera lens, and most of the image sensors are CMOS (complementary metal-oxide-semiconductor). However, the image quality is bad after digital zoom, and although most of the electronic devices are equipped with ten million pixels image sensor, it is still hard to achieve high magnification and high resolution image by the optical zoom.

Therefore, the market begins to provide a connectorized camera lens having optical zoom, which can be connected to the mobile phone or tablet by a supporter, to achieve high magnification and high resolution image. However, the connectorized camera lens having optical zoom needs to be carried as an additional peripheral product. It is inconvenient to install and remove the connectorized camera lens before and after photographing, and the instant timing of pressing the shutter release is easily lost. Besides, the connectorized camera lens having optical zoom is connected onto the built-in camera lens of the mobile phone or tablet, and the disadvantages are loose contact, light leakage, or difficulty with focusing by the built-in camera. Therefore, the disadvantages in prior art should be solved.

According to the above description, the present invention provides a camera module comprising a pivot and a lens barrel, so that the pivot serves as an axis for the lens barrel to rotate. The present invention also provides an electronic device having said camera module and using said camera module to shoot images rotatably.

The objective of the invention is to provide a camera module, comprising a pivot and a lens barrel. The pivot comprises a first end portion and a second end portion opposite to the first end portion. The lens barrel is connected to the pivot and comprises a camera lens, a focusing structure located on the lens barrel, and a pivoting portion opposite to the camera lens. The pivoting portion can rotatably pivot on the first end portion of the pivot.

Preferably, the second end portion of the pivot further comprises a USB plug. Preferably, the focusing structure is a rotatable focusing structure.

Preferably, the camera lens further comprises lens elements opposite to the pivoting portion.

Preferably, the lens barrel further comprises a motor in the lens barrel.

More preferably, the focusing structure is an electrical focusing structure having a pushrod.

The camera module further comprises a body, the body comprising an engaging end and an abutment surface adjacent to the engaging end; wherein the engaging end is connected to the second end portion of the pivot of the camera module.

Preferably, the engaging end of the body is removably connected to the second end portion of the pivot.

More preferably, the engaging end of the body further comprises a USB slot, and the USB plug of the second end portion of the pivot is fitted in the USB slot of the engaging end.

Preferably, the second end portion is mounted in the engaging end of the body.

Preferably, the body is a mobile phone, a tablet, a laptop, a screen or a media player.

The advantages of the present invention are:
1. The camera module of the present invention has small volume and a pivot, and the camera module can be telescopically rotated when an electronic device is equipped with the camera module, so that the camera module can shoot images from multi-faceted perspectives.
2. The electronic device having the camera module of the present invention can be immediately launched for shooting without additional assembling and disassembling, due to the combination design of the camera module and the electronic device. And the camera module comprises the optical lens barrel that is telescopic, so that the camera module can shoot high magnification and high resolution images.

Other objectives, advantages and novel features of the invention will become more apparent from the following detailed description when taken in conjunction with the accompanying drawings.

### IN THE DRAWINGS:

Fig. 1 is a front view of the camera module of the present invention;
Fig. 2 is a front view of the electronic device having the camera module of the present invention;
Fig. 3 is a partially enlarged view of the electronic device having the camera module of the present invention;
Fig. 4 is a partially exploded view of the electronic device having the camera module of the present invention;
Fig. 5 illustrates an operational view of the electronic device having the camera module of the present invention; and
Fig. 6 illustrates an operational view and side view of the electronic device having the camera module of the present invention.

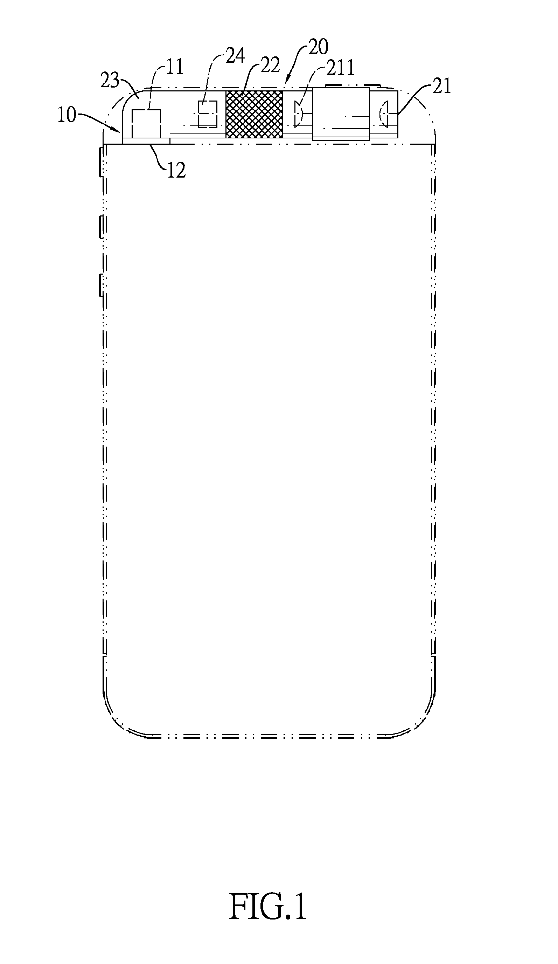

As shown in Fig. 1, the present invention provides a camera module comprising a pivot 10 and a lens barrel 20 that is telescopic.

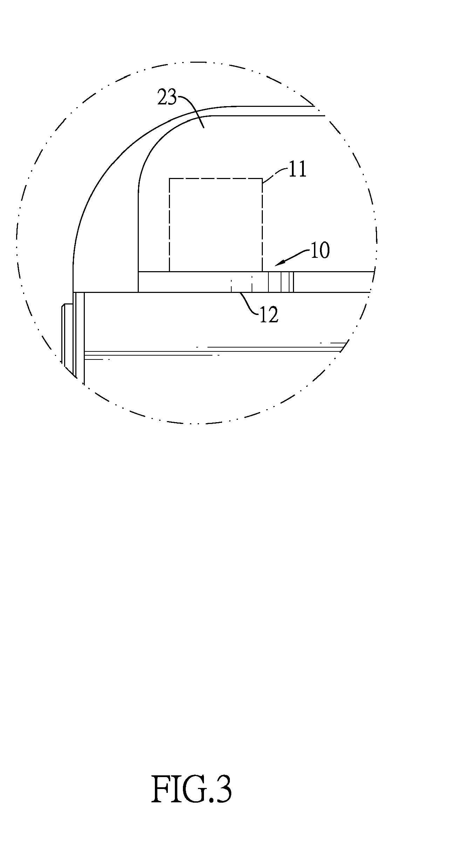

As shown in Fig. 1 to Fig. 4, the pivot 10 comprises a first end portion 11 and a second end portion 12 opposite to the first end portion 11. In another preferred embodiment, the second end portion 12 of the pivot 10 further comprises a USB plug 121.

The lens barrel 20 is connected to the pivot 10 and comprises a camera lens 21, a focusing structure 22 located on the lens barrel 20, and a pivoting portion 23 opposite to the camera lens 21. The camera lens 21 further comprises lens elements 211 opposite to the pivoting portion 23, shooting images via optical zoom mode. The focusing structure 22 is a rotatable focusing structure. The pivoting portion 23 can rotatably pivot on the first end portion 11 of the pivot 10. In another preferred embodiment, the lens barrel 20 further comprises a motor 24 in the lens barrel 20, and the focusing structure 22 is an electrical focusing structure having a pushrod.

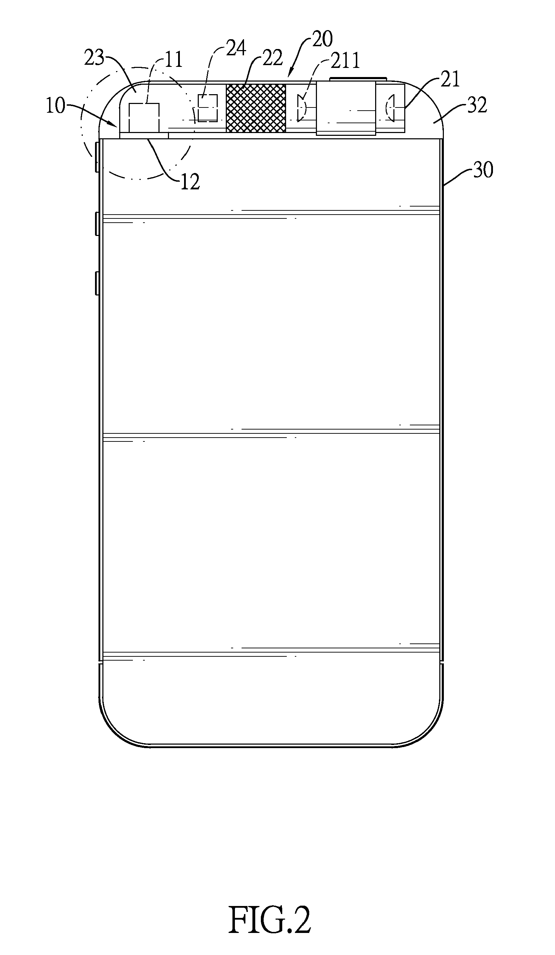

As shown in Fig. 2 to Fig. 4, in a preferred embodiment, the camera module further comprises a body 30, and the body 30 is, but not limited to, a mobile phone, a tablet, a laptop, a screen or a media player. The body 30 comprises an engaging end 31 and an abutment surface 32 adjacent to the engaging end 31, and the engaging end 31 is connected to the second end portion 12 of the pivot 10 of the camera module. In another preferred embodiment, the engaging end 31 of the body 30 is removably connected to the second end portion 12 of the pivot 10. In another preferred embodiment, the engaging end 31 of the body 30 further comprises a USB slot 311, and the USB plug 121 of the second end portion 12 of the pivot 10 is fitted in the USB slot 121 of the engaging end 31. In another preferred embodiment, the second end portion 12 is mounted fixedly in the engaging end 31 of the body 30.

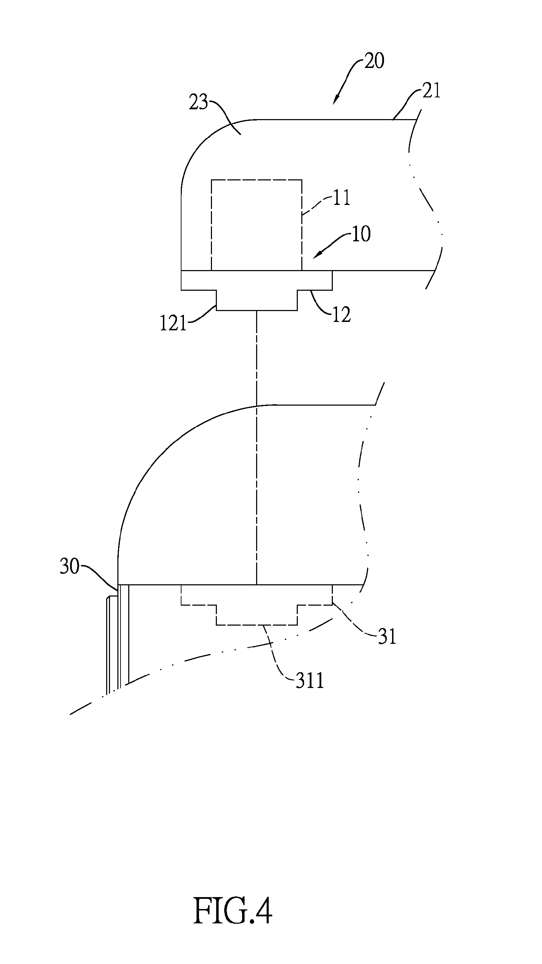

As shown in Fig. 4, when the present invention is in use, the lens barrel 20 is pivoted on the pivot 10, and the lens barrel 20 can be selectively plugged in or plugged out via the USB plug 121 of the second end portion 12 of the pivot 10 and the USB slot 311 of the engaging end 31 of the body 30. Thus, the camera module of the present invention can be mounted in different electronic devices as desired via the USB interface.

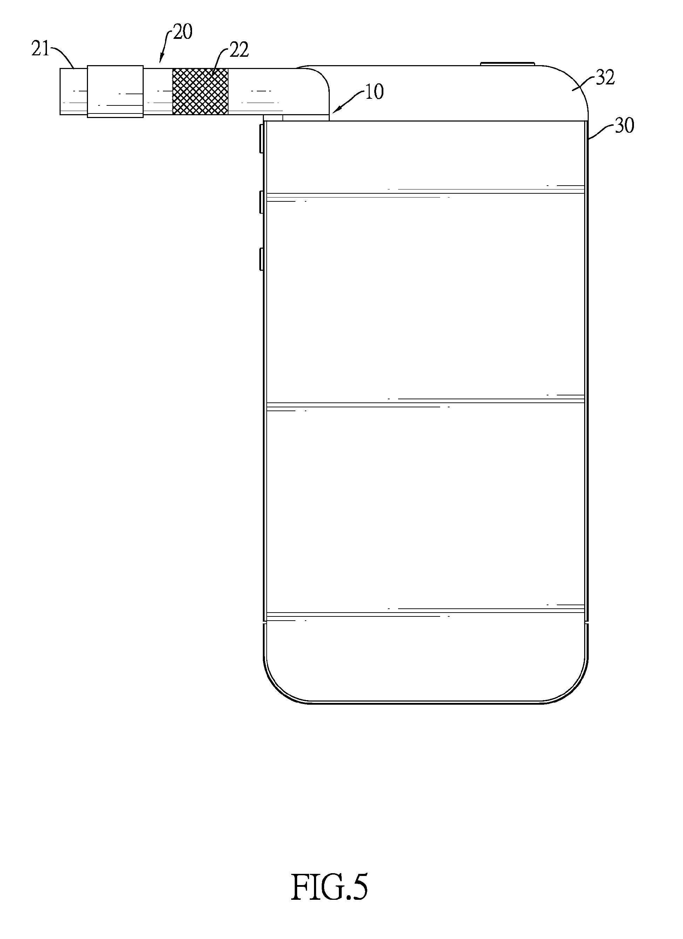

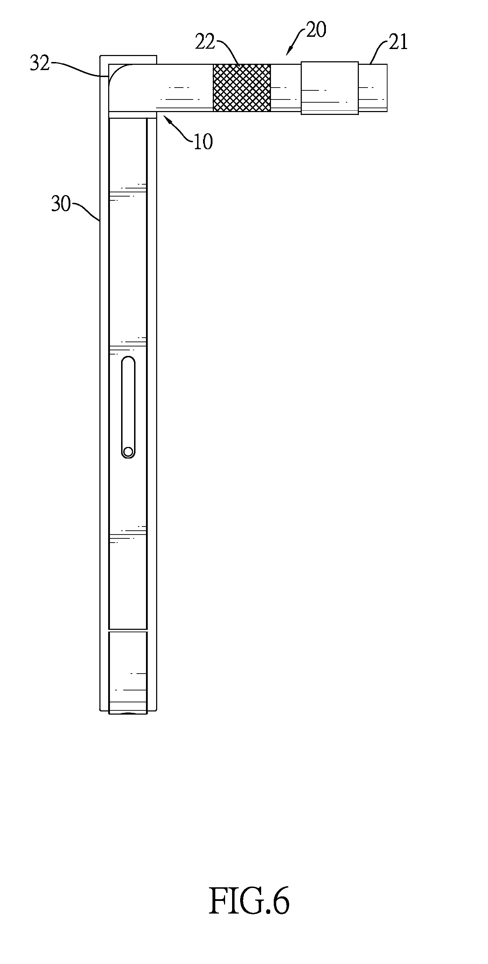

As shown in Fig. 5 and Fig. 6, when the present invention is in use, the lens barrel 20 takes the pivot 10 as an axis, so that the lens barrel 20 can be rotated relative to the pivot 10. When the lens barrel 20 abuts the abutment surface 32 of the body 30, an angle between the lens barrel 20 and the abutment surface 32 is 0 degree; when the lens barrel 20 rotates away from the abutment surface 32, the angle is 180 degrees for multi-faceted perspectives shooting. In another preferred embodiment, when the camera lens 21 of the lens barrel 20 takes the pivot 10 as an axis, and the camera lens 21 is pushed away from the abutment surface 32 of the body 30, the electronic device will be automatically launched to the camera mode. After the camera lens 21 is pushed to the desired angle, the focusing structure 22 of the lens barrel 20 can be adjusted for optical zoom. The focal length can be adjusted not only through the focusing structure 22 of the lens barrel 20, but also through the software installed in the electronic device. On the contrary, when the camera lens 21 of the lens barrel 20 takes the pivot 10 as an axis, and the camera lens 21 is pushed back to the body 30, the electronic device will automatically close the camera mode.

The present invention of the cameral module can be added to the electronic device that already has both front and rear camera lenses. The image sensor of the camera module can be charge coupled device (CCD) or complementary metal-oxide-semiconductor (CMOS).

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A camera module, comprising:
a pivot (10), comprising a first end portion (11) and a second end portion (12) opposite to the first end portion (11); and
a lens barrel (20), comprising a camera lens (21), a focusing structure (22) located on the lens barrel (20), and a pivoting portion (23) opposite to the camera lens (21); wherein the pivoting portion (23) can rotatably pivot on the first end portion (11) of the pivot (10).

2. The camera module according to claim 1, wherein the second end portion (12) of the pivot (10) further comprises a USB plug (121).

3. The camera module according to claim 1, wherein the focusing structure (22) is a rotatable focusing structure.

4. The camera module according to claim 1, wherein the camera lens (21) further comprises lens elements (211) opposite to the pivoting portion (23).

5. The camera module according to claim 1, wherein the lens barrel (20) further comprises a motor (24) in the lens barrel (20).

6. The camera module according to claim 5, wherein the focusing structure (22) is an electrical focusing structure having a pushrod.

7. An electronic device, comprising
the camera module according to claim 1; and
a body (30), comprising an engaging end (31) and an abutment surface (32) adjacent to the engaging end (31); wherein the engaging end (31) is connected to the second end portion (12) of the pivot (10) of the camera module.

8. The electronic device according to claim 7, wherein the engaging end (31) of the body (30) is removably connected to the second end portion (12) of the pivot (10).

9. The electronic device according to claim 8, wherein the engaging end (31) of the body (30) further comprises a USB slot (311), and the USB plug (121) of the second end portion (12) of the pivot (10) is fitted in the USB slot (311) of the engaging end (31) of the body (30).

10. The electronic device according to claim 7, wherein the second end portion (12) is mounted fixedly in the engaging end (31) of the body (30).

11. The electronic device according to claim 7, wherein the body (30) is a mobile phone, a tablet, a laptop, a screen or a media player.
